# EUROPÄISCHE PATENTANMELDUNG

(11) **EP 1 277 524 A1**
(43) Veröffentlichungstag der Anmeldung: **22.01.2003**
(21) Anmeldenummer: 01117453.9
(22) Anmeldetag: 19.07.2001
(51) Int. Cl.: B09B 3/00

(54) **Entleeren von Druckmetallbehältern für Fluide mit ausserhalb eines Werkzeugs liegendem Fluidkanal**

(71) Anmelder: Eggerstorfer Montagebau GmbH, 85764 Oberschleissheim (DE)
(72) Erfinder: Eggerstorfer, Uwe, 85764 Oberschleissheim (DE)
(74) Vertreter: Szynka, Dirk

(57) **Zusammenfassung**

Die Erfindung betrifft ein neues Verfahren und eine neue Vorrichtung zum Öffnen und Entleeren von Stoßdämpfern, wobei die wesentliche Neuerung darin besteht, dass das Öl aus dem stoßdämpfer austritt, während sich ein Werkzeug (2) noch in der durch das Werkzeug hergestellten Öffnung befindet. Dabei strömt das Öl an einer Außenfläche des Werkzeugs (2) und innerhalb einer Dichtung (1) entlang.

## Beschreibung

Die Erfindung betrifft ein Verfahren und eine Vorrichtung zum Öffnen und Entleeren von Druckmetallbehältern für Fluide. Dabei richtet sich die Erfindung vor allem auf das Öffnen und Entleeren von Stoßdämpfern, etwa solche von Straßenfahrzeugen.

Stoßdämpfer enthalten ein Stoßdämpferöl, das wegen seiner Brennbarkeit und von ihm ausgehender Umweltgefahren entsorgt werden sollte, wenn ein Stoßdämpfer das Ende seiner Lebensdauer erreicht hat. Hierzu muss das Stoßdämpferöl durch die relativ massiven Metallwände des Stoßdämpfers hindurch abgelassen werden können. Dieses Problem tritt vor allem in kleineren und mittleren Betrieben wie Schrottplätzen und Kraftfahrzeugwerkstätten in erheblichem Umfang auf.

Ein wesentliches Problem liegt in dem Vermeiden eines unkontrollierten Austritts oder Verspritzens des Stoßdämpferöls beim Öffnen der Stoßdämpferwand. Hierzu hat die Patentanmeldung EP 00 105 684.5 vorgeschlagen, eine Vorrichtung mit einem Werkzeug zu verwenden, das eine Spitze oder Schneide aufweist, und mit dieser Vorrichtung das Werkzeug mit Hilfe eines Druckfluidantriebs langsam und gleichmäßig in eine Druckmetallbehälterwand hineinzudrücken. Der wesentliche Gedanke bei dieser Erfindung lag darin, dass die im Stand der Technik verbreiteten Bohrvorrichtungen wegen der dabei unvermeidlicherweise entstehenden Metallspäne einen zuverlässigen Ablauf des Stoßdämpferöls erschweren. Zum anderen lag der in der zitierten Anmeldung beschriebenen Erfindung die Erkenntnis zugrunde, dass die wegen der Massivität der Stoßdämpferwände im Stand der Technik ebenfalls vorgeschlagene Öffnung dieser Wände durch ein plötzliches und schlagartiges Einsetzen des Werkzeuges zu unkontrollierten Verformungen und Rissen der Stoßdämpferwand führen kann, wobei dann der Austritt des Stoßdämpferöls möglicherweise nicht mehr kontrolliert werden kann.

In dem zitierten Dokument wird außerdem vorgeschlagen, ein Werkzeug mit einer spitzen Rundkegelform zu verwenden, das bei einem vorsichtigen und langsamen Eindrücken in die Stoßdämpferwand eine im wesentlichen dichtende Anlage gegen die Stoßdämpferwand bilden kann. Dann kann das Stoßdämpferöl durch das Werkzeug hindurch abgelassen werden, so dass sich eine äußere Dichtung erübrigt. In dieser Weise kann außerdem die von dem Stoßdämpferöl kontaminierte Fläche minimiert werden.

Im übrigen treten ähnliche Probleme auch bei anderen Druckmetallbehältern auf, beispielsweise Gasflaschen und Hydraulikzylindern oder anderen Metallbehältern von gefährlichen, giftigen oder umweltproblematischen Flüssigkeiten. Die vorliegende Erfindung ist also genauso wenig wie die zitierte Anmeldung auf die Entsorgung von Stoßdämpferöl beschränkt.

Der vorliegenden Erfindung liegt ausgehend von dem geschilderten Stand der Technik das Problem zugrunde, ein Verfahren für eine Vorrichtung zum Öffnen und Entleeren von Druckmetallbehältern anzugeben, die gegenüber dem Stand der Technik verbesserte Möglichkeiten bieten.

Hierzu richtet sich die Erfindung auf ein Verfahren zum Öffnen und Entleeren von Druckmetallbehältern für Fluide, bei dem mit einem eine Spitze oder Schneide aufweisenden Werkzeug eine Öffnung in einer Wand des Druckmetallbehälters aufgedrückt wird, dadurch gekennzeichnet, dass eine bei dem Entleeren des Druckmetallbehälters das Werkzeug umgebende und dichtend an der Wand des Druckmetallbehälters anliegende elastische Dichtung vorgesehen ist und, während sich das Werkzeug in der Öffnung in der Wand befindet, zwischen der Öffnung und einem ersten Bereich einer Außenfläche des Werkzeugs sowie zwischen der Dichtung und einem an den ersten Bereich anschließenden zweiten Bereich der Außenfläche des Werkzeugs ein Kanal gebildet wird, durch den hindurch das Fluid aus dem Druckmetallbehälter abgeführt wird, sowie auf eine entsprechend ausgestaltete Vorrichtung.

Bevorzugte Ausgestaltungen der Erfindung sind in den abhängigen Ansprüchen angegeben. Auch dabei sind die einzelnen Merkmale jeweils im Hinblick auf ihren Verfahrenscharakter und ihren Vorrichtungscharakter zu verstehen.

Der vorliegenden Erfindung liegt folgender Gedanke zugrunde: Wenn man, wie in der zitierten Anmeldung vorgeschlagen, das Werkzeug selbst bzw. seine Anlage an die Behälterwand als Abdichtung für das Fluid verwendet und demzufolge auf eine separate Dichtung ganz verzichtet, so wird man entsprechend diesem Stand der Technik das Fluid durch einen Kanal in dem Werkzeug aus dem Behälter heraus führen. Alternativ könnte man auch das Werkzeug nach dem Aufdrücken der Öffnung ganz zurückziehen und damit die Öffnung freigeben, um dann das Fluid aus der freien Öffnung austreten zu lassen.

Die vorliegende Erfindung geht jedoch einen anderen Weg, indem sie vorschlägt, das Werkzeug beim Entleeren des Druckmetallbehälters in der Öffnung zu belassen, jedoch außerdem eine das Werkzeug umgebende und eine dichtende Anlage an die Druckmetallbehälterwand herstellende separate Dichtung zu verwenden. Dann kann das Werkzeug zwar in der Öffnung bleiben, jedoch ein Kanal zwischen einer Außenfläche des Werkzeuges im Bereich der Öffnung und der Öffnung frei bleiben, durch den das Fluid austreten kann. Das Fluid fließt dann weiter innerhalb der Dichtung, d.h. zwischen der Außenfläche des Werkzeuges und der Dichtung. Die Außenfläche des Werkzeuges, und zwar genau genommen ein erster Bereich im Bereich der Öffnung der Druckmetallbehälterwand und ein zweiter Bereich, der außerhalb des Druckmetallbehälters daran anschließt, einerseits und andererseits die Öffnung in der Druckmetallbehälterwand und die Dichtung definieren also einen Ablasskanal für das Fluid. Damit kann auf einen innerhalb des Werkzeugs liegenden Innenkanal verzichtet werden oder ein solcher Innenkanal zumindest ergänzt werden.

Gleichzeitig hat das Verbleiben des Werkzeuges in der Öffnung den Vorteil, zusätzlich zur Stabilisierung beizutragen und ein Verrutschen der Vorrichtung gegenüber dem Druckmetallbehälter zu vermeiden. Da für die Anlage der Dichtung gegen die Druckmetallbehälterwand eine gewisse Kraft notwendig ist, andererseits durch eventuelle Schmiereigenschaften des Fluids diese Anlage möglicherweise relativ rutschgefährdet ist, kann dieser Aspekt eine wesentliche Rolle für die Zuverlässigkeit und Kontrolliertheit des Verfahrens spielen. Dabei ist zu berücksichtigen, dass ein Verrutschen unweigerlich zu einem unkontrollierten Austreten des Fluids und damit zu einer Gefährdung des Personals oder der Umwelt führen würde. Dies gilt insbesondere für einen mobilen Einsatz, bei dem also die Vorrichtung bzw. ein Teil der Vorrichtung per Hand bewegt und an einem Stoßdämpfer oder dergleichen in eingebautem Zustand eingesetzt wird.

Die Ersetzung eines innenliegenden Kanals in dem Werkzeug oder die Ergänzung eines solchen Kanals durch den oben beschriebenen Kanal entlang der Außenfläche des Werkzeugs hat den Vorteil, die Querschnittsfläche für das Durchtreten des Fluids zu vergrößern. Im Hinblick auf diese Querschnittsfläche sind innenliegende Kanäle in dem Werkzeug nämlich begrenzt, weil die Stabilität des Werkzeugs vor allem im Bereich der die Druckmetallbehälterwand letztlich aufdrückenden Frontflächen durch große Kanäle bzw. große Kanalöffnungen eingeschränkt würde. Die Erfindung bietet also die Möglichkeit, das Fluid schneller abzuführen als bei dem zitierten Stand der Technik.

Der Geschwindigkeit des Entleerens des Fluids kommt außerdem entgegen, dass das Werkzeug beim Entleeren in der Öffnung verbleiben kann. Das Entleeren kann also sofort beginnen, wenn das Werkzeug die Öffnung in der Druckmetallbehälterwand hergestellt hat. Es muss nicht erst zurückgezogen werden, insbesondere muss auch nicht eine andere Dichtung, die etwa mit einer Absaugleitung verbunden sein könnte, nach Zurückziehen des Werkzeuges aufgesetzt werden.

Wie bereits bei der zitierten Voranmeldung dargestellt, ist auch bei dieser Erfindung bevorzugt, das Werkzeug gleichmäßig und langsam in die Druckmetallbehälterwand hineinzudrücken. Es soll vorzugsweise weder eingeschlagen, noch eingehämmert, noch eingeschossen werden, um die durch stoßartige Belastungen möglichen unkontrollierten Verformungen und Risse der Wand zu verhindern. Diese haben nämlich selbst dann, wenn eine das Werkzeug umgebende zusätzliche Dichtung vorgesehen ist, den Nachteil, ein unkontrolliertes Austreten des Fluids zumindest in Einzelfällen zu ermöglichen, etwa wenn ein solcher Riss über den durch die Dichtung abgedeckten Flächenbereich der Wand des Druckmetallbehälters hinaus geht oder diese Wand durch eine unkontrollierte Verbiegung nicht mehr für eine dichtende Anlage der Dichtung geeignet ist.

Das langsame und gleichmäßige Aufdrücken wird wiederum vorzugsweise mit einem Hydraulikzylinder bewerkstelligt. Dieser kann besonders praktisch durch eine Hydraulikpumpe versorgt werden, die ihrerseits pneumatisch betrieben ist. Pneumatische Versorgungen, insbesondere Druckluft, sind nämlich bei den meisten in Frage kommenden Werkstätten ohnehin vorhanden. Außerdem arbeitet eine pneumatisch betriebene Hydraulikpumpe beim Umgang mit brennbaren Fluiden sicherer als eine elektrische Pumpe oder ein Verbrennungsmotor. Es kann natürlich auch eine elektrische Versorgung der Hydraulikpumpe gewählt werden, wenn diese Aspekte unwesentlich sein sollten.

Bei dieser Erfindung gibt es verschiedene Möglichkeiten, den Kanal insbesondere dort zu erzeugen, wo er von der Öffnung in der Druckmetallbehälterwand begrenzt ist. Beispielsweise könnte das Werkzeug nach dem Aufdrücken nur ein klein wenig zurückgezogen werden, um einen Spalt freizugeben. Dieses geringe Zurückziehen führt weder zu einer wesentlichen Zeitverzögerung noch wird die Sicherungsfunktion des Werkzeuges in der Öffnung dadurch erheblich beeinträchtigt.

Außerdem besteht die Möglichkeit, das Werkzeug zumindest in dem in den Ansprüchen als erster Bereich der Außenfläche bezeichneten Abschnitt, also dort wo der Kanal zusammen mit der Öffnung der Druckmetallbehälterwand gebildet wird, nicht rotationssymmetrisch, etwa kantig, auszubilden. Wenn das Werkzeug dann nach dem Aufdrücken etwas verdreht wird, so entstehen notwendigerweise Spalte zwischen diesem Bereich der Werkzeugaußenfläche und der Druckmetallbehälterwand.

Besonders einfach und effektiv und daher bevorzugt sind jedoch zwei weitere Möglichkeiten: Zum einen kann die Außenfläche des Werkzeugs zumindest in dem sogenannten ersten Bereich Rillen für das Abführen des Fluids aufweisen, also in irgendeiner Weise konkav gestaltet sein. Diese Rillen können beispielsweise einfache Fräsnuten in der Außenfläche sein. Vorzugsweise setzen sich diese Rillen auch in den sogenannten zweiten Bereich der Außenfläche fort und unterstützen das Austreten des Fluids auch in dem Bereich des Kanals, der außen von der Dichtung begrenzt ist.

Die andere bevorzugte Möglichkeit, die alternativ zu der eben beschriebenen oder zusätzlich dazu vorgesehen sein kann, besteht darin, dem Werkzeug einen sich entlang der Richtung des Aufdrückens ändernden Querschnittsprofilverlauf zu geben. Im folgenden wird der Einfachheit halber bei der Richtung des Aufdrückens von der Axialrichtung des Werkzeugs gesprochen, wenngleich dieses Werkzeug sich weder notwendigerweise drehen muss noch rotationssymmetrisch sein muss. Die Änderung des Querschnittsprofils entlang der axialen Richtung, wobei der Querschnitt senkrecht zur axialen Richtung gemeint ist, soll so erfolgen, dass zunächst mit einer ersten Form des Profils der Anfang der Öffnung erzeugt wird und ein Rissmuster in der Druckmetallbehälterwand entsteht. Dieses Rissmuster ist dabei wohlgemerkt nicht unkontrolliert, sondern im wesentlichen auf den Bereich des Eindringens des Werkzeuges begrenzt, geht jedenfalls nicht soweit über den durch die Dichtung erfassten Flächenbereich hinaus, dass die beschriebenen Probleme entstehen würden. Wenn nun das Werkzeug weiter in die Wand hineingedrückt wird, so weitet sich die Öffnung weiter aus. Insbesondere wenn dabei eine eckige erste Profilform verwendet wird, deren Ecken Schneiden des Werkzeuges bilden, kann vorteilhafterweise ein völlig spanfreies kontrolliertes Aufschälen der Wand nach innen hervorgerufen werden, wobei die sich nach innen verbiegenden Wandteile durch durch diese Schneiden hervorgerufene Risse oder Trennlinien voneinander getrennt sind. Dabei ist also das Muster der Risse (wobei "Risse" "Schneidlinien" mit beinhaltet) durch die erste Profilform vorgeprägt.

Wenn nun die Profilform zu einer zweiten Profilform wechselt, die von der ersten Profilform wesentlich abweicht, so ist das Rissmuster nicht mehr an die an ihm anliegende zweite Profilform angepasst. Allein dadurch entstehen Spalte für den Fluidkanal. Das Werkzeug kann dennoch noch weiter eingedrückt werden, um mit der zweiten Profilform ein weiteres Aufschälen zu bewirken. Dadurch werden die Spalte noch mehr vergrößert. Dies ist jedoch nicht unbedingt notwendig.

Die erste Profilform kann beispielsweise dreieckig oder viereckig sein, die zweite Profilform sollte entweder eine größere Zahl von Ecken aufweisen und/oder konvexer gestaltet sein, also nach außen gerundete Flächen zwischen den Ecken aufweisen, und/oder rund (kreisrund oder eliptisch oder ähnlich) sein. Die konvexeren oder runden Profilabschnitte drücken dann die beschriebenen Metallteile zwischen den Rissen weiter radial nach außen (radial im Sinne von senkrecht zu der Axialrichtung des Werkzeuges) und schälen diese in das Innere des Druckmetallbehälters hinein. Im Bereich der Risse entstehen dann Spalte für den Fluidkanal.

Außerdem kann in dem Werkzeug ein innerer Kanal vorgesehen sein. Zum einen schließt die Erfindung einen Innenkanal für das Fluid nicht aus sondern ergänzt diesen möglicherweise nur. Zum anderen könnte alternativ oder zusätzlich auch ein Innenkanal in dem Werkzeug enthalten sein, der für einen Druckausgleich in dem Druckmetallbehälter dient. Damit kann das Ablaufen des Fluids unterstützt werden, sobald der innere Überdruck des Druckmetallbehälters abgebaut ist. Schließlich kann ein solcher Innenkanal auch zu einer Druckgasbeaufschlagung des Inneren des Druckmetallbehälters dienen, um das Entleeren zu beschleunigen. Beispielsweise könnte über einen Innenkanal Druckluft in einen Stoßdämpfer eingepresst werden, so dass das Stoßdämpferöl relativ schnell entnommen werden kann.

Bevorzugt ist schließlich die Verwendung einer mobilen Vorrichtung, die als mobile Einheit ein mit der Hand bewegbares Vorrichtungsteil aufweist, das von einer Bedienungsperson beispielsweise unter einem Fahrzeug an eingebauten Stoßdämpfern eingesetzt werden kann. Dieses mobile Teil kann durch eine Druckfluidleitung von einem Begleitwagen versorgt werden, indem beispielsweise die Hydraulikpumpe enthalten ist. Der Begleitwagen kann neben dem Fahrzeug stehen bleiben und behindert damit den Benutzer nicht. Das mobile Teil kann ein vorzugsweise hakenförmiges Widerlager aufweisen, um die Gegenkraft beim Eindrücken des Werkzeuges in den Stoßdämpfer aufzunehmen und eine sichere Verankerung zu erlauben.

Erfindungsgemäß ist ferner eine Dichtung vorgesehen, die zumindest teilweise aus einem PU-Material besteht.

Der Erfindung liegt der Gedanke zugrunde, dass die Verwendung einer das Werkzeug umgebenden elastischen Dichtung für das Entleeren an der Werkzeugaußenfläche entlang zunächst notwendig, aber auch aus anderen Gründen von Vorteil sein kann. Zum einen kann es z.B. bei gasförmigen Fluiden oder sehr dünnflüssigen Fluiden unzureichend sein, sich alleine auf eine dichtende Anlage zwischen dem Werkzeug und der Druckmetallbehälterwand zu verlassen. Zum zweiten können gerade bei einem bei dem bereits in der zitierten früheren Anmeldung beschriebenen und auch hier bevorzugten mobilen Einsatz der Vorrichtung möglichen Verkippen eines mobilen Teils bzw. Handgeräts gegenüber dem Stoßdämpfer während des Öffnens und Entleerens Undichtigkeiten zwischen Werkzeug und Druckmetallbehälterwand auftreten.

Ein besonders geeignetes Dichtungsmaterial ist das bereits erwähnte Polyurethanmaterial (PU-Material), das sich bei der Erprobung durch die Erfinder außerordentlich bewährt hat. Mit der Materialklasse der Polyurethanmaterialien lassen sich die für die erfindungsgemäße Dichtung je nach ihrer spezifischen Formgebung und Belastung geeigneten elastischen Eigenschaften in weiten Grenzen einstellen, so dass eine optimale Dichtheit gewährleistet werden kann. Die PU-Materialien haben sich vor allem gegenüber chemischer oder mechanischer Beanspruchung als sehr dauerhaft erwiesen und erreichen im praktischen Einsatz lange Lebensdauern. Nach Kenntnis der Erfinder ist der Einsatz solcher PU-Materialien für Dichtungen dieser Art nicht bekannt. Vielmehr handelt es sich dabei insbesondere um Materialien, die bislang für Sohlen von Sportschuhen verwendet wurden.

Günstige Materialparameter können zum einen eine durch die deutsche Industrienorm DIN 53505 definierte Shore-A-Härte im Bereich von 20 - 60, vorzugsweise 30 - 50, sein. Dabei handelt es sich um relativ weich eingestelltes PU-Material, das sich an der Druckmetallbehälterwand gut anschmiegt. Andererseits ist es hart genug, um den üblichen Belastungen, insbesondere den Drücken von Stoßdämpferöl in Stoßdämpfern, widerstehen zu können.

Ferner ist es bevorzugt, dass das verwendete PU-Material ein günstiges Dauerbiegeverhalten hat. Dies ist eine Anforderung, die vor allem bei Schuhsohlenmaterialien erfüllt wird. Es ist nämlich nicht ausreichend, wenn die erfindungsgemäße Dichtung nur am Anfang ihrer Verwendung die geforderten Eigenschaften hat. Sie muß vielmehr auch nach häufigem Gebrauch unverändert ihre Aufgabe erfüllen können. Bei der Entsorgung des Inhalts von Druckmetallbehältern, insbesondere von Stoßdämpferöl, werden die Dichtungen in der Praxis jedoch außerordentlich häufig durch Verformungen und Kompressionen beansprucht, so dass auf das Dauerbiegeverhalten, ähnlich wie bei Schuhsohlenmaterialien, besonderer Wert gelegt werden sollte. Es hat sich bewährt, hier einen Wert von zumindest 50.000, vorzugsweise von über 70.000, zu verlangen. Dieses Dauerbiegeverhalten ist durch die DIN 53543 definiert.

Weiterhin ist es bevorzugt, ein zumindest zweikomponentiges PU-System zu verwenden. Die Mehrkomponentigkeit bezieht sich dabei natürlich auf das Herstellungsverfahren der Dichtung. Die Dichtung selbst wird bei ihrer Verwendung normalerweise einteilig sein und aus einem durchgehenden Material bestehen. Dies ist allerdings nicht unbedingt notwendig, es könnten auch mehrteilige und/oder aus mehreren Materialien zusammengesetzte Dichtungen Verwendung finden. Dabei beziehen sich die Aussagen in dieser Beschreibung auf zumindest ein Teil der Dichtung, insbesondere auf das für die elastische Verformung und Anpassung an die Druckmetallbehälterwand verantwortliche Teil. Die Verwendung mehrkomponentiger Systeme hat gegenüber einkomponentigen Systemen den Vorteil größerer Flexibilität und einer relativ kurzen Aushärtzeit bei der Herstellung und führt damit zu praktischeren Prozessen und preisgünstigeren Dichtungen.

Bewährt haben sich insbesondere Polyether-PU-Materialien, wenngleich auch Polyester-Materialien in Frage kommen. Die Polyether-Materialien lassen sich in der Regel bei niedrigeren Temperaturen verarbeiten, insbesondere in der Umgebung der Raumtemperatur, was wiederum einem einfachen und damit preisgünstigen Herstellungsprozess entgegenkommt. Es kann sich insbesondere um ein zweikomponentiges Polyether-PU-Materialsystem handeln, bei dem eine Komponente ein Gemisch aus Polyolen, Aktivatoren, Stabilisatoren und Treibmitteln und die andere Komponente eine Mischung mit Diphenyl-Methan-Diisocyanat ist. Bevorzugt ist insbesondere das unter dem Handelsnamen Elastopan vertriebene Material S 7588/100 der Elastrogran GmbH, 82133 Olching.

Bevorzugt ist schließlich, dass es sich bei dem erfindungsgemäßen PU-Material um ein Gießelastromer handelt, das also durch einen einfachen Gießvorgang zu der Dichtung vergossen werden kann. Diese Anforderung wird von dem genannten Material Elastopan erfüllt.

Ferner ist das Material Elastopan nach Aushärtung im wesentlichen transparent. Eine transparentere Dichtung ist ebenfalls für die Erfindung bevorzugt, weil damit das Entleeren des Druckmetallbehälters visuell kontrolliert werden kann. Die visuelle Kontrolle kann dabei das Ansetzen und Eindrücken des Werkzeugs betreffen und auch das Austreten des Fluids und dessen Ende umfassen.

Damit lässt sich die Verwendung eines Schauglases, mit dem der Übertritt des Fluids beispielsweise von dem Kanal in dem Werkzeug zu einer weiterführenden Ablassleitung optisch kontrolliert werden könnte, ersetzen. Eine transparente Dichtung hat demgegenüber nicht nur den Vorteil der einfacheren Konstruktion, sondern zeigt das Austreten und das Ende des Austretens des Fluides auch früher an. Außerdem lässt sich, wie bereits festgestellt, nur durch die Dichtung die Position des Werkzeuges gegenüber der Druckbehälterwand tatsächlich kontrollieren.

Das Ausführungsbeispiel verdeutlicht eine vorteilhafte Formgebung für die Dichtung, wobei dabei folgende Aspekte (auch getrennt) wesentlich sind: Zunächst ist grundsätzlich bevorzugt, dass die Dichtung eine im wesentlichen zylindrische Form hat, wobei der Zylinder an der behälterabgewandten Seite bis auf eine Durchtrittsöffnung für das Werkzeug geschlossen sein kann und auf der behälterzugewandten Seite verjüngt ausgebildet sein kann. Die Wände der Zylinderform sind dabei vorzugsweise faltenbalgartig, also in einem Schnitt parallel zur Werkzeugachse wellenartig, gestaltet. Damit können sie sich besonders günstig zusammenschieben, indem sie an den Kanten der Faltenbalgform bzw. Wellenform geknickt werden. In dieser Weise kann die Dichtung im entspannten Zustand bis an die Vorderseite des Werkzeuges ragen und dieses vollständig schützen und abdecken sowie ein Abtropfen von Öl von dem Werkzeug auf den Boden verhindern. Andererseits lässt sich das Werkzeug tief in den Druckmetallbehälter einführen, ohne dass die Dichtung diese Bewegung wesentlich behindert.

Wenn die dem Druckmetallbehälter zugewandte Seite der Dichtung nach innen schräg aufeinander zulaufende Wände aufweist, etwa eine konische Gestalt oder auch eine in irgendeiner Weise gekrümmt nach innen verjüngte Gestalt, so wird zusätzlich zu der Eigenstabilität der Dichtungswände vermieden, dass das zunächst unter Druck austretende Fluid die Dichtung in diesem Bereich auseinanderdrückt und zwischen Druckmetallbehälter und Dichtung austreten kann. Zur Veranschaulichung wird auf das Ausführungsbeispiel verwiesen. Schließlich kann die behälterabgewandte Seite der Dichtung in besonders einfacher Weise direkt zwischen einem durch das Werkzeug gebildeten Bund oder dergleichen und einer auf der den Druckmetallbehälter abgewandten Seite vorgesehenen Anlagefläche klemmend gehalten sein. Damit muss die Dichtung beispielsweise nur auf einen Montageschaft des Werkzeuges aufgesteckt werden und wird automatisch gehalten, wenn das Werkzeug eingesetzt und befestigt ist. Die Anlagefläche auf der dem Druckmetallbehälter abgewandten Seite kann dabei vorzugsweise außen so gestaltet sein, dass sie die Dichtung etwas umgreift, um ein seitliches Ausbrechen beim Andrücken der Dichtung an den Behälter zu verhindern. Beispielsweise kann die Dichtung in diesem Bereich schräg angefast sein und die Anlagefläche hierzu komplementär ausgebildet sein.

Im folgenden wird die Erfindung anhand eines konkreten Ausführungsbeispiels näher erläutert, das in den beiliegenden Figuren dargestellt ist. Im einzelnen zeigt:
Figur 1 eine Darstellung des wesentlichen Teils einer erfindungsgemäßen Vorrichtung mit einer erfindungsgemäßen Dichtung und einem erfindungsgemäßen Werkzeug sowie Einzelteile zu deren Befestigung;
Figur 2 eine Querschnittsansicht, eine Seitenansicht, eine Frontansicht und eine Axiallängsschnittansicht des Werkzeuges aus Figur 1; und
Figur 3 die Teile aus Figur 1 in zusammengebautem Zustand sowie weitere Teile der erfindungsgemäßen Vorrichtung.

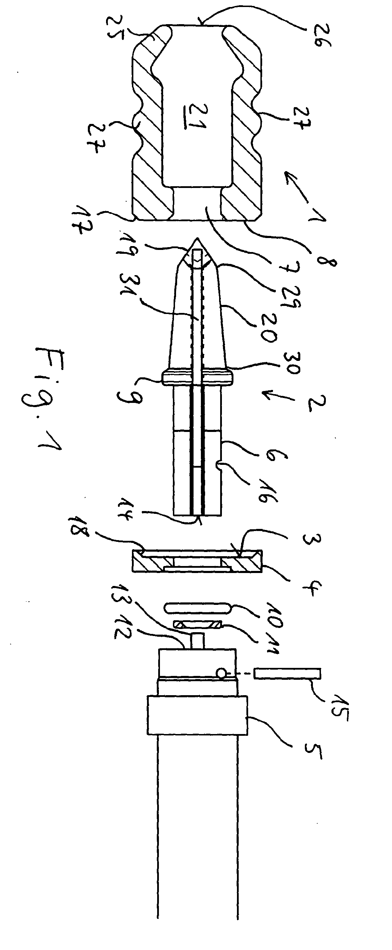

Figur 1 zeigt die Einzelheiten der für die Erfindung wesentlichen Teile einer Vorrichtung zum Öffnen und Entleeren eines Stoßdämpfers eines PKW oder LKW. Links ist eine Dichtung 1 eingezeichnet, in der Mitte ein Werkzeug 2, rechts davon eine eine Anlagefläche 3 für die Dichtung 1 aufweisende Montagescheibe 4 und rechts davon eine Kolbenstange 5 nebst Kleinteilen zur Befestigung des Werkzeuges.

Die in den Figuren dargestellten Teile sind, soweit sich nicht aus den Figuren und der Beschreibung eindeutig anderes ergibt, um die horizontale Achse rotationssymmetrisch.

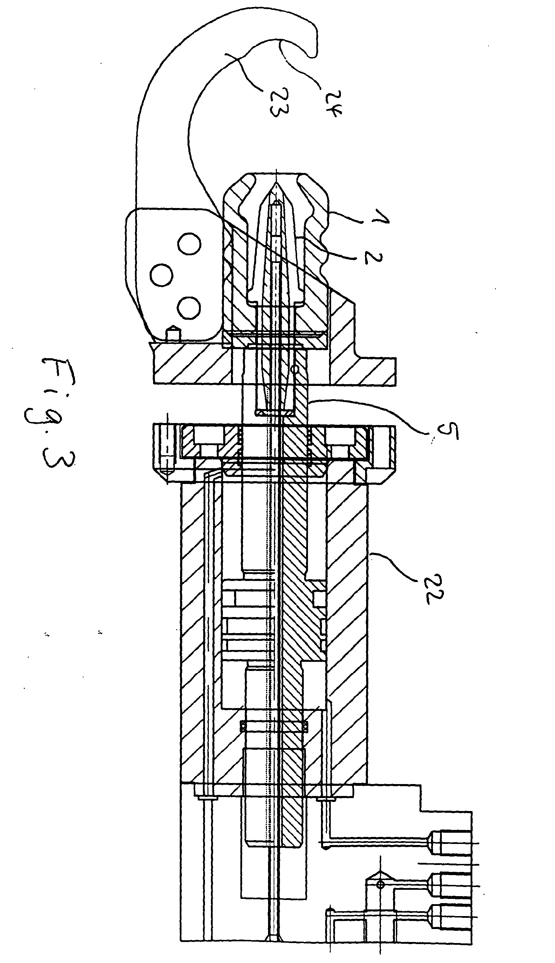

Figur 3 zeigt die Teile in zusammengebautem Zustand, wobei auf die zusätzlichen Einzelheiten in Figur 3 weiter unten eingegangen wird. Man erkennt, dass das Werkzeug 2 mit einem Werkzeugschaft 6 durch eine Öffnung 7 in einer dem (nicht dargestellten) Stoßdämpfer abgewandten Abschlusswand 8 hindurchgeführt werden kann und mit einem Bund 9 an der Wand 8, nämlich an ihrer Innenseite, die infolge der Öffnung 7 einen Ansatz bildet, anschlägt.

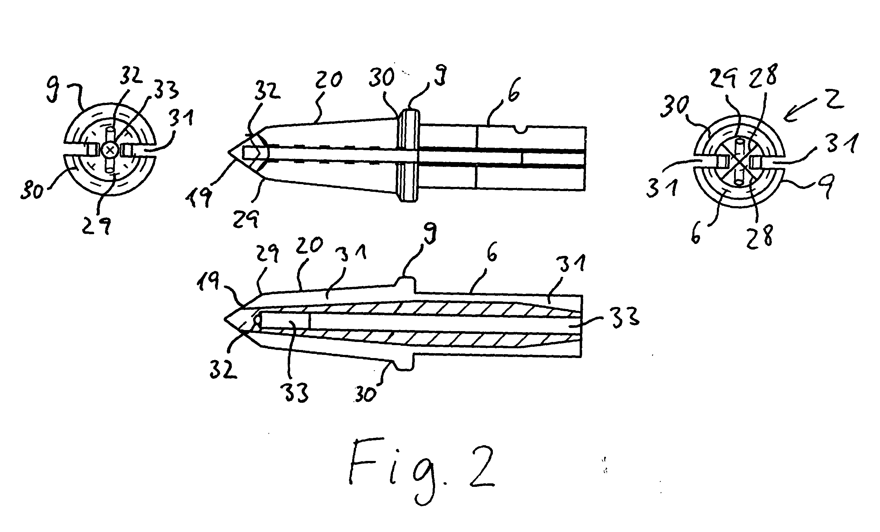

Der Schaft 6 des Werkzeuges 2 ragt dann über die Wand 8 der Dichtung 1 hinaus und kann durch eine zentrische Öffnung in der Montagescheibe 4 hindurchgeführt und über einen Dichtungs-O-Ring 10 hindurch in eine Aufnahme 12 der Kolbenstange 5 hineingeführt werden. Die-Aufnahme 12 weist einen in den Kanal 14 einzuführender Anschluss 13 für einen axial und zentrisch in dem Werkzeug 2 verlaufenden Innenkanal 14 auf, der in den detaillierten Darstellungen in Figur 2, die weiter unten noch näher erläutert werden, auch im Querschnitt gut zu erkennen ist. Der Anschluss 13 wird dabei in den Kanal 14 eingeführt, wie Figur 3 zeigt.

In der Aufnahme 12 der Kolbenstange 5 kann der Werkzeugschaft 6 dann mit Hilfe eines Verriegelungsstiftes 15 verriegelt werden, der in eine Nut 16 an dem Werkzeugschaft 6 eingreift.

Figur 3 verdeutlicht, dass der Bund 9 dann die Dichtung 1 an die Anlagefläche 3 der Montageplatte 4 andrückt. Dabei ist die der Montageplatte 4 zugewandte Abschlusswand 8 der Dichtung 1 außen in einem Bereich 17 angefast, wobei die Anlagefläche 3 der Montageplatte 4 komplementäre angefaste Außenwände aufweist. Diese Bereiche sind mit 18 bezeichnet. Wenn die Dichtung 1 in in den Figuren horizontaler Richtung stark komprimiert wird, also von links nach rechts zurückgeschoben wird, so verhindern die Anfasungen 17 und 18 ein seitliches Ausbrechen der Dichtung 1 an der Montageplatte 4. Die Anfasung liegt unter 45° zu den benachbarten Flächen.

Die auf der dem Schaft 6 abgewandten Seite des Werkzeuges 2, also in den Figuren die linke Seite, besteht im wesentlichen aus einem Bereich 19 mit einer ersten Profilform und einem zweiten Bereich 20 mit einer zweiten Profilform. Diese Bereiche 19 und 20 des Werkzeuges 2 liegen im montierten Zustand bei entspannter Dichtung 1 innerhalb eines durch die Dichtung gebildeten und in axialer Richtung zu dem Stoßdämpfer hin geöffneten Hohlraum 21 der Dichtung 1. Die Profilformen werden noch im folgenden beschrieben.

Figur 3 zeigt, dass die Kolbenstange 5 von einem Hydraulikzylinder 22 angetrieben wird, der hier nicht näher erläutert wird. Zu der Funktionsweise des Hydraulikzylinders 22 sowie der ihn beinhaltenden mobilen Einheit der erfindungsgemäßen Vorrichtung und des Begleitwagens, der diese mobile Einheit mit Hydrauliköl versorgt und das entleerte Stoßdämpferöl sammelt, wird auf die eingangs zitierte frühere Patentanmeldung EP 00 105 684.5 verwiesen. Die dortige Beschreibung gilt von den Details des Werkzeuges 2 und der Dichtung 1 abgesehen auch hier. Der Begleitwagen enthält eine pneumatisch betriebene Hydraulikpumpe und ist seinerseits über eine Druckluftleitung mit der Druckluftversorgung der Werkstatt verbunden.

Figur 3 zeigt neben dem Hydraulikzylinder 22 außerdem eine in nicht näher dargestellter Weise mit den feststehenden Teilen des Hydraulikzylinders 22 fest verbundenen Haken 23, der eine Auswölbung 24 für Stoßdämpfer aufweist und zur Aufnahme derselben dient. Er bildet ein Widerlager für das Aufdrücken der Stoßdämpfer.

Wenn nun ein Stoßdämpfer in der Aufnahme 24 des Hakens 23 liegt, kann das Werkzeug 2 mit Hilfe der Kolbenstange 5 des Hydraulikzylinders 22 nach vorne gefahren werden, was zumindest bis zu der Anlage der vorderen Spitze des Werkzeuges 2 an der Stoßdämpferwand langsam und kontrolliert erfolgt. Bevor die vordere Spitze des Werkzeuges 2 die Stoßdämpferwand erreicht, bildet das dem Stoßdämpfer zugewandte Ende der Dichtung 1, das in dem mit 25 bezeichneten Bereich unter etwa 45° schräg nach innen zu einer Öffnung 26 zusammenläuft, eine dichtende Anlage an der Stoßdämpferwand. Dabei liegt die Begrenzung der Öffnung 26 an der Stoßdämpferwand an. Wenn die Spitze des Werkzeuges 2 dann an die Stoßdämpferwand herangedrückt wird, wird die Dichtung 1 in einem faltenbalgartig ausgestalteten Seitenwandbereich 27 komprimiert und in ihrer horizontalen Erstreckung (im Sinne der Figuren, nicht unbedingt im Sinne des Einsatzes) zusammengedrückt. Dabei kann der vordere Bereich 19 des Werkzeuges 2 beginnen, in die Stoßdämpferwand ein Loch hineinzudrücken.

Hierzu zeigt die rechte obere Darstellung in Figur 2 eine Vorderansicht des Werkzeuges 2. Man erkennt dabei zusammen mit den seitlichen Darstellungen in Figur 2 in der Mitte und in Figur 1, dass der vordere Bereich 19 des Werkzeuges 2 vierkantig prismatisch ausgestaltet ist. Die vier Schneidkanten sind in Figur 2 mit 28 bezeichnet. Dieser prismatische Abschnitt 19 schneidet gewissermaßen den ersten Teil der Öffnung in die Stoßdämpferwand ein und definiert damit den Kanten 28 entsprechende Risse bzw. Schnittlinien in der Stoßdämpferwand, wobei sich die Metallwandteile zwischen den Kanten 28 in das Stoßdämpferinnere hinein verbiegen bzw. aufrollen. Die Stoßdämpferwand wird also gewissermaßen aufgeschält.

Am Ende des Bereichs 19 geht diese prismatische Form in eine im Querschnitt zur Achsenrichtung kreisrunde Querschnittsform über, wobei das Profil des Werkzeuges 2 in diesem hinteren Bereich 20 weniger steil ansteigt als in dem vorderen Bereich 19. Der Anstieg erfolgt von einem in den Figuren 1 und 2 mit 29 bezeichneten ersten Kreisumfang bis zu einem zweiten Kreisumfang 30.

Dabei drückt die nun viel konvexere Profilform des Bereichs 20 die Metalllappen zwischen den den Kanten 28 entsprechenden Rissen bzw. Schnittlinien weiter radial nach außen bzw. in das Stoßdämpferinnere. Die Lappen reißen dabei in kontrollierter Weise soweit auseinander, dass die Risslinien gegenüber dem jeweiligen kreisrunden Außenumfang des Bereichs 20 des Werkzeugs 2 an den Winkelpositionen der Kanten 28 und in deren Umgebung Schlitze freigeben. Durch diese Schlitze kann das Stoßdämpferöl durch die Öffnung in der Stoßdämpferwand sowie durch die Öffnung 26 der Dichtung 1 und durch das Innere 21 der Dichtung aus dem Stoßdämpfer austreten.

Dieses Austreten wird ferner durch zwei unter 180° zueinander axial verlaufend an dem Werkzeug 2 angebrachte Fräsrillen 31 unterstützt, die sich von einem vorderen Abschnitt des Bereichs 19 des Werkstücks 2 an über die gesamte axiale Erstreckung des Werkstücks 2 bis zu dessen entgegengesetzten Ende erstrecken. Die Fräsrillen 31 ermöglichen dabei insbesondere auch das Hindurchtreten des Stoßdämpferöls durch die im übrigen bündig mit dem Schaft 6 des Werkzeugs 2 abschließende Öffnung 7 der Dichtung 1 und transportieren das Stoßdämpferöl innerhalb der Kolbenstange 5 weiter. Dort wird es von einem hier nicht näher diskutierten Ölablasskanal zu einer Schlauchleitung weitergeführt und von dieser zu einem Sammeltank in den Begleitwagen gebracht. Die untere Schnittdarstellung in Figur 2, in der das Werkzeug um 90° um die Achse gedreht ist, verdeutlicht diese Fräsrillen 31 dadurch, dass die Schraffur den Schnitt durch das Vollmaterial des Werkzeugs 2 darstellt und der nicht schraffierte außerhalb liegende Bereich somit den Fräsrillen 31 zuzuordnen ist.

Figur 2 zeigt weiterhin in dieser unteren Darstellung einen im vorderen Bereich 19 des Werkzeugs 2 mit zwei seitlichen Öffnungen 32 endenden Innenkanal 33, der auch in den beiden Darstellungen links und rechts oben in Figur 2 zu erkennen ist. Die Darstellung links oben entspricht dabei einem Querschnitt quer zur Achsenrichtung im Bereich des Bundes 9. Dieser Innenkanal 33 mit den Öffnungen 32 kann zum einen zum Belüften des Stoßdämpferinneren dienen, also zum Druckausgleich nach Abbau des inneren Überdrucks des Stoßdämpfers. Bei diesem Ausführungsbeispiel wird er jedoch zusätzlich dazu verwendet, aktiv Druckluft in den Stoßdämpfer einzublasen, und zwar auf ein per Druckknopf vermitteltes Signal des Bedieners hin, um nach einem Versiegen des ersten Stoßdämpferölschwalls nach dem Öffnen des Stoßdämpfers das restliche Stoßdämpferöl unter Druck beschleunigt aus dem Stoßdämpfer auszutreiben. Dabei ist zu berücksichtigen, dass die Öffnungen 32 nach dem Herstellen der Öffnungen der Stoßdämpferwand relativ weit innerhalb des Stoßdämpferinneren liegen, die Stoßdämpferwand also längst weit im hinteren Bereich 20 des Werkzeugs 2 angeordnet ist.

Während dieses Vorgangs liegt die Dichtung 1 unter mit weiterem Eindringen des Werkzeugs 2 zunehmendem axialen Andruck an der Stoßdämpferwand an, wobei die konische Form der vorderen Wandabschnitte 25 dafür sorgt, dass das unter Druck austretende Stoßdämpferöl die eher weiche Dichtung nicht auseinanderbiegt und austritt. Gleichzeitig ist die relativ weiche Auslegung der Dichtung 1 dafür verantwortlich, dass sich der vordere Bereich, also die Umrandung der Öffnung 26 der Richtung 1, vollständig und passend an die gekrümmte Stoßdämpferwand anschmiegen kann.

Diese Formanpassung, der beim Entleeren auftretende Innendruck des Stoßdämpferöls in dem Innenraum 21 und insbesondere auch die starke Kompression der Dichtung 1 in dem faltenbalgartigen Abschnitt 27 sowie in dem konischen Bereich 25 führen insgesamt zu einer sehr starken Materialbeanspruchung der Dichtung 1, weswegen diese aus dem bereits beschriebenen Zweikomponenten-Polyester-PU-Material gefertigt ist. Dabei handelt es sich um das Material S 75 88/100 der Elastogran GmbH aus 82133 Olching, das von dieser unter der Handelsbezeichnung Elastopan angeboten wird. Dieses weist eine Shore-A-Härte von 41 nach DIN 53505 und ein Dauerbiegevermögen von mindestens 100.000 nach DIN 53543 auf. Weiterhin hat das Material eine sogenannte Rückprallelastizität von etwa 60 %. Darunter wird die nach dem Aufprallen (einer Versuchsstahlkugel) verbleibende kinetische Energie verstanden. Das Material ist also besonders elastisch und dabei auch in der Lage, die beim Andruck auf die Dichtung 1 ausgeübten Kräfte mit der Vorderseite auch auf die Anlage zwischen der Dichtung 1 und der Stoßdämpferwand zu übertragen.

Es hat im übrigen auch hervorragende Werte bezüglich Zugfestigkeit, Bruchdehnung und Abrieb, die jedoch für die vorliegende Anwendung weniger im Vordergrund stehen. Wesentlich ist, dass dieses Material, wie andere PU-Materialien mit entsprechender Einstellung der Weichheit grundsätzlich auch, einen hervorragenden Kompromiss zwischen Elastizität, Dehnbarkeit und Dauerbiegeverhalten aufweist. Trotz seiner Stabilität und Dauerbelastbarkeit ist es dabei relativ weich. Bei diesem Material handelt es sich ursprünglich um einen für Sportschuhsohlen vorgesehenen PU-Werkstoff.

Im übrigen ist dieses PU-Material gießbar und als Gussteil im wesentlichen transparent. Die Transparenz erlaubt es, bei der fertig montierten Vorrichtung aus Figur 3 durch die Dichtung 1 hindurch den Vorgang des Aufdrückens der Stoßdämpferwand und des Entleerens des Stoßdämpferöls visuell zu kontrollieren und zu beobachten. Man erkennt also insbesondere sofort, wenn der Aufdrückvorgang irregulär abläuft, wann das erste Stoßdämpferöl kommt und wann kein Stoßdämpferöl mehr ausläuft, so dass die Druckluft durch den Innenkanal 33 eingeblasen werden sollte.

Die Dichtung 1 wird durch Niederdruckgießen in einer dreiteiligen Aluminiumform hergestellt, wobei die der Kolbenstange 5 zugewandte Fläche der Wand 8 vorzugsweise die Oberseite bildet. Dort sind infolge der relativ großflächigen Anlage an die Anlagefläche 3 der Montagescheibe 4 geringere Anforderungen an die Oberflächenqualität gegeben. Auch diese Anlage muss nämlich dichten. Das Niederdruckgießen kann bei einer Temperatur im Bereich von 25 - 30° C erfolgen und benötigt eine Aushärtzeit von größenordnungsmäßig nur etwa 5 Minuten. Damit ist in technisch besonders einfacher und schneller Weise eine preiswerte Produktion der Dichtungen 1 ermöglicht, die ja ein Verschleißteil der erfindungsgemäßen Vorrichtung darstellen.

Insgesamt bietet die Erfindung eine für die Praxis außerordentlich wertvolle Möglichkeit, in einfacher und wirkungsvoller Weise Stoßdämpfer zur Entsorgung von Stoßdämpferöl zu entleeren.

Dabei kann die erfindungsgemäße Vorrichtung insbesondere per Hand bewegt und unter einem Fahrzeug am noch eingebauten Stoßdämpfer eingesetzt werden.

Im übrigen ermöglicht sie die Öffnung beliebiger konventioneller Stoßdämpfer, ohne dass diese mit einer für diese Form der Entsorgung eigens vorgesehenen Schwachstelle oder Wandverdünnung versehen sein müssten. Schließlich erfolgt die Öffnung der Stoßdämpferwand einerseits so vorsichtig und schonend, dass praktisch kein Stoßdämpferöl außerhalb der Dichtung 1 austritt und andererseits keine Späne entstehen, die das Abführen des Öls durch die verschiedenen Kanäle und Leitungen behindern würden.

## Patentansprüche

1. Verfahren zum Öffnen und Entleeren von Druckmetallbehältern für Fluide, bei dem mit einem eine Spitze oder Schneide aufweisenden Werkzeug (2) eine Öffnung in einer Wand des Druckmetallbehälters aufgedrückt wird,
**dadurch gekennzeichnet,**
**dass** eine bei dem Entleeren des Druckmetallbehälters das Werkzeug (2) umgebende und dichtend an der Wand des Druckmetallbehälters anliegende elastische Dichtung (1) vorgesehen ist
und während sich das Werkzeug (2) in der Öffnung in der Wand befindet zwischen der Öffnung und einem ersten Bereich einer Außenfläche des Werkzeugs (2) sowie zwischen der Dichtung (1) und einem an den ersten Bereich anschließenden zweiten Bereich der Außenfläche des Werkzeugs (2) ein Kanal gebildet wird, durch den hindurch das Fluid aus dem Druckmetallbehälter abgeführt wird.

2. Verfahren nach Anspruch 1, bei dem die Wand mit Hilfe eines Druckfluidantriebs (22) langsam und gleichmäßig aufgedrückt wird.

3. Verfahren nach Anspruch 2, bei dem das Werkzeug (2) von einem Hydraulikzylinder (22) angetrieben wird, der von einer pneumatisch betriebenen Hydraulikpumpe versorgt wird.

4. Verfahren nach einem der vorstehenden Ansprüche, bei dem der erste Bereich der Außenfläche des Werkzeugs (2) Rillen (31) aufweist, die zumindest einen Teil des Kanals für das Abführen des Fluids bilden.

5. Verfahren nach einem der vorstehenden Ansprüche, bei dem die Außenfläche des Werkzeugs (2) in senkrecht zur Richtung des Aufdrückens genommenen Querschnitten sich entlang dieser Richtung ändernde Profilformen (19, 20, 28, 29, 30) aufweist,
wobei eine bei dem Aufdrücken zunächst wirksame erste Profilform (19, 28) ein kontrolliertes Aufreißen mit einem Rissmuster vorgibt
und eine bei dem Aufdrücken danach wirksame zweite Profilform (20, 29, 30) von der zunächst wirksamen ersten Profilform (19, 28) so abweicht, dass zwischen der Außenfläche des Werkzeugs (2) und der Öffnung in der Wand ein Spalt für den Kanal zum Abführen des Fluids aus dem Druckmetallbehälter entsteht.

6. Verfahren nach Anspruch 5, bei dem mit der zweiten Profilform (20, 29, 30), das durch die erste Profilform (19, 28) vorgegebene Rissmuster weiter aufgeweitet wird, jedoch in seiner Form im wesentlichen erhalten bleibt.

7. Verfahren nach Anspruch 5 oder 6, bei dem die erste Profilform (19, 28) eckig ist und die Ecken Schneidkanten (28) des Werkzeugs entsprechen.

8. Verfahren nach Anspruch 5, 6 oder 7, bei dem die zweite Profilform (20, 29, 30) rund ist.

9. Verfahren nach einem der vorstehenden Ansprüche, bei dem das Werkzeug (2) einen innenliegenden Kanal (33) aufweist, der in einer Öffnung (32) endet, die beim Entleeren des Fluids in dem Druckmetallbehälter liegt, und der zum Druckausgleich oder zur Druckgasbeaufschlagung des Druckmetallbehälters dient.

10. Verfahren nach einem der vorstehenden Ansprüche, bei dem der Druckmetallbehälter ein Straßenfahrzeugstoßdämpfer ist und das Fluid Stoßdämpferöl ist.

11. Verfahren nach Anspruch 10, bei dem konventionelle Stoßdämpfer ohne für das Verfahren ausgelegte Wandschwachstellen geöffnet und entleert werden.

12. Verfahren nach Anspruch 10 oder 11, bei dem der Stoßdämpfer mit einem durch eine Druckfluidleitung von einem Begleitwagen versorgten mobilen Teil aufgedrückt und entleert wird, der dabei von einer Bedienungsperson unter einem Fahrzeug, in dem der Stoßdämpfer eingebaut ist, gehoben, gehalten und bewegt wird.

13. Vorrichtung zum Öffnen und Entleeren von Druckmetallbehältern für Fluide mit einem Verfahren nach einem der vorstehenden Ansprüche, wobei die Vorrichtung versehen ist mit einem eine Spitze oder Schneide aufweisenden Werkzeug (2) und einem Antrieb (22) zum Aufdrücken einer Öffnung in einer Wand des Druckmetallbehälters mit dem Werkzeug (2),
**gekennzeichnet durch**
eine Dichtung (1), die dazu ausgelegt ist, das Werkzeug (2) bei dem Entleeren des Druckmetallbehälters zu umgeben und an der Wand des Behälters dichtend anzuliegen,
wobei die Vorrichtung dazu ausgelegt ist, daß während sich das Werkzeug (2) in der Öffnung in der Wand befindet zwischen der Öffnung und einem ersten Bereich einer Außenfläche des Werkzeugs (2) sowie zwischen der Dichtung (1) und einem an den ersten Bereich anschließenden zweiten Bereich der Außenfläche des Werkzeugs (2) ein Kanal gebildet wird, **durch** den hindurch das Fluid aus dem Druckmetallbehälter abgeführt wird.
